# EUROPEAN PATENT SPECIFICATION

(11) **EP 3 444 142 B1**
(45) Date of publication and mention of the grant of the patent: **01.12.2021**
(21) Application number: 18188706.8
(22) Date of filing: 13.08.2018
(51) Int. Cl.: B60L 15/20, G01L 5/22, G01L 25/00, B62B 5/00, G01D 18/00

(54) **METHOD AND APPARATUS FOR LOAD SENSOR CALIBRATION OF ELECTRIC MOVING VEHICLE**
VERFAHREN UND VORRICHTUNG ZUR LASTSENSORKALIBRIERUNG EINES ELEKTRISCHEN FAHRZEUGS
PROCÉDÉ ET APPAREIL POUR ÉTALONNER UN CAPTEUR DE CHARGE ÉLECTRIQUE D'UN VÉHICULE EN MOUVEMENT

(30) Priority: 14.08.2017 KR 20170102894
(43) Date of publication of application: 20.02.2019
(73) Proprietor: Naver Labs Corporation, Seongnam-Si, Gyeonggi-Do 13494 (KR)
(72) Inventor: Seo, Joonho, 13494 Seongnam-si, Gyeonggi-do (KR); Chung, Jinwon, 13494 Seongnam-si, Gyeonggi-do (KR); Yu, Donghun, 13494 Seongnam-si, Gyeonggi-do (KR); Seok, Sangok, 13494 Seongnam-si, Gyeonggi-do (KR)
(74) Representative: V.O.

(56) References cited:
- EP-A1- 3 021 196
- JP-A- 2015 093 637
- US-A- 5 483 820
- US-A- 5 746 282
- US-A1- 2017 106 931

## Description

### BACKGROUND

### 1. Field of the Invention

The following description of example embodiments relates to a calibration technology of a force detection sensor applied to an electric moving vehicle.

### 2. Description of the Related Art

Currently, moving vehicles are used to carry goods for various purposes in various fields, such as, for example, shopping malls, home delivery services, and industrial sites.

For example, Korean Utility Model Registration NO. 20-0440927 registered on July 2, 2008, discloses a structure of a transportation vehicle used to move, for example, packing boxes at a short distance in a warehouse or a distribution center.

When heavy goods are loaded on a moving vehicle, a user needs to use a considerable amount of force to move the moving vehicle. Further, it becomes more difficulty for the user to control the moving vehicle to move in a desired direction by appropriately operating the loaded moving vehicle and the user may need to experience a significant difficulty in transporting the goods.

Accordingly, an electric moving vehicle including a motor and moving through driving of the motor is widely used.

US 2017/106931 A1 describes a computer-implemented calibration method for a force sensor mounted on an electric moving vehicle, comprising collecting sensing values of a force detection sensor and setting a zero point of the force detection sensor; calibration measurements are carried out upon start-up of the vehicle.

### SUMMARY

The invention according to the independent claims provides a calibration method and apparatus that may minimize a zero point error by maximally avoiding an external interference factor with respect to a force detection sensor applied to an electric moving vehicle.

According to to the invention, there is provided a computer-implemented calibration method including collecting a sensing value of a force detection sensor that detects a force applied to an electric moving vehicle during charging of a battery included in the electric moving vehicle; and setting a zero point of the force detection sensor based on the sensing values collected during charging of the battery.

The setting includes setting the zero point of the force detection sensor using a majority value that most frequently appears among the collected sensing values.

Alternatively, the setting includes setting the zero point of the force detection sensor using an average value of remaining sensing values excluding a maximum value and a minimum value from among the collected sensing values.

The setting may include setting the zero point of the force detection sensor using the collected sensing values if a number of the collected sensing values is greater than or equal to a threshold; and setting the zero point of the force detection sensor using a preset initial setting value or a sensing value that is previously set as the zero point if the number of collected sensing values is less than the threshold.

The setting may include determining the average or majority of the sensing values set as the zero point of the force detection sensor as a calibration error if the average or majority of the sensing values set as the zero point of the force detection sensor is outside a preset setting range and outputting a calibration error alert.

The setting may include newly collecting the sensing value of the force detection sensor from a point in time at which a user instruction is input in response to the input of the user instruction for requesting reperforming of a calibration, and setting the zero point of the force detection sensor based on the newly collected sensing values.

The setting range may be determined based on an initial setting value predetermined for the zero point of the force detection sensor as a reference used to determine a reliability of the sensing value set as the zero point of the force detection sensor.

The collecting may include storing a noise-removed sensing value after removing noise from the sensing value of the force detection sensor using a low pass filter.

The electric moving vehicle may be configured as a moving transportation structure on which a user is boarded.

According to the invention, there is provided a calibration apparatus of an electric moving vehicle, the calibration apparatus including a force detection sensor configured to detect a force applied to the electric moving vehicle; and a controller configured to collect a sensing value of the force detection sensor during charging of a battery included in the electric moving vehicle, and to set a zero point of the force detection sensor based on the sensing values collected during charging of the battery.

According to the invention, it is possible to maximally avoid an external interference factor and to minimize a zero point error by performing a calibration of a force detection sensor during a charging process of an electric moving vehicle.

According to some example embodiments, it is possible to enhance reliability of a zero point and to significantly reduce a risk probability by a malfunction by reusing an initial setting value or a currently secured reliable zero point if a value set as a zero point is outside a setting range.

Further areas of applicability will become apparent from the description provided herein. The description and specific examples in this summary are intended for purposes of illustration only and are not intended to limit the scope of the present disclosure.

### BRIEF DESCRIPTION OF THE DRAWINGS

These and/or other aspects, features, and advantages of the invention will become apparent and more readily appreciated from the following description of embodiments, taken in conjunction with the accompanying drawings of which:
FIG. 1 is a perspective view of an electric moving vehicle according to an example embodiment;
FIG. 2 is a diagram illustrating a configuration of an electric moving vehicle according to an example embodiment;
FIG. 3 illustrates an example of a process of transferring a force applied by a user in an electric moving vehicle according to an example embodiment;
FIGS. 4 through 6 illustrate examples of a process of driving an electric moving vehicle based on a force applied by a user in the electric moving vehicle according to an example embodiment;
FIG. 7 is a diagram illustrating a configuration of components includable in a calibration apparatus according to an example embodiment;
FIG. 8 is a flowchart illustrating an example of a calibration method of an electric moving vehicle performed by a calibration apparatus according to an example embodiment;
FIG. 9 is a flowchart illustrating an example of an operation of setting a zero point of a force detection sensor according to an example embodiment; and
FIG. 10 is a flowchart illustrating another example of an operation of setting a zero point of a force detection sensor according to an example embodiment.

### DETAILED DESCRIPTION

One or more example embodiments will be described in detail with reference to the accompanying drawings. Example embodiments, however, may be embodied in various different forms, and should not be construed as being limited to only the illustrated embodiments. Rather, the illustrated embodiments are provided as examples so that this disclosure will be thorough and complete, and will fully convey the concepts of this disclosure to those skilled in the art. Accordingly, known processes, elements, and techniques, may not be described with respect to some example embodiments. Unless otherwise noted, like reference characters denote like elements throughout the attached drawings and written description, and thus descriptions will not be repeated.

Although the terms "first," "second," "third," etc., may be used herein to describe various elements, components, regions, layers, and/or sections, these elements, components, regions, layers, and/or sections, should not be limited by these terms. These terms are only used to distinguish one element, component, region, layer, or section, from another region, layer, or section. Thus, a first element, component, region, layer, or section, discussed below may be termed a second element, component, region, layer, or section, without departing from the scope of this disclosure.

As used herein, the singular forms "a," "an," and "the," are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups, thereof. As used herein, the term "and/or" includes any and all combinations of one or more of the associated listed items.

Unless otherwise defined, all terms (including technical and scientific terms) used herein have the same meaning as commonly understood by one of ordinary skill in the art to which example embodiments belong. Terms, such as those defined in commonly used dictionaries, should be interpreted as having a meaning that is consistent with their meaning in the context of the relevant art and/or this disclosure, and should not be interpreted in an idealized or overly formal sense unless expressly so defined herein.

Hereinafter, example embodiments will be described with reference to the accompanying drawings.

The example embodiments relate to a calibration method and apparatus that may minimize a zero point error by maximally avoiding an external interference factor with respect to a force detection sensor applied to an electric moving vehicle.

The example embodiments disclosed herein may achieve many advantages in terms of reliability, safety, convenience, and cost saving, etc., of an electric moving vehicle.

The term "electric moving vehicle" used herein may inclusively indicate a transportation device of goods and a transportation device in a structure on which a person, for example, a user is boarded. If the electric moving device is for boarding a person, the electric moving device may include, for example, an electric wheelchair, an electric moving bed, an electric stroller, and an electric wagon. Hereinafter, the example embodiments will be described using the transportation device of goods as a representative example, however, are not limited thereto.

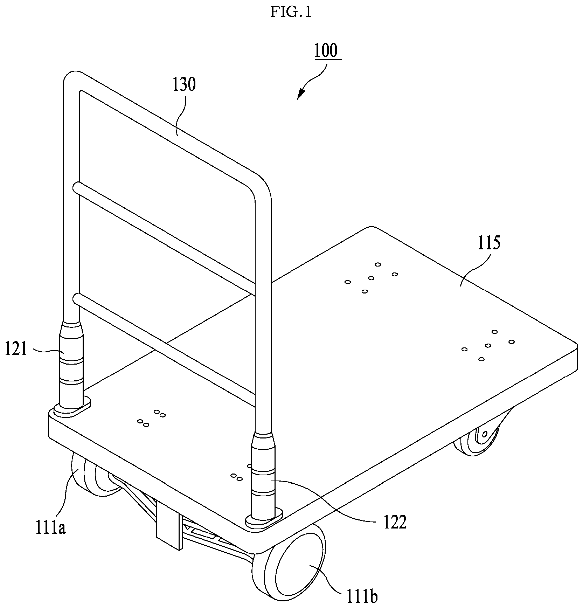

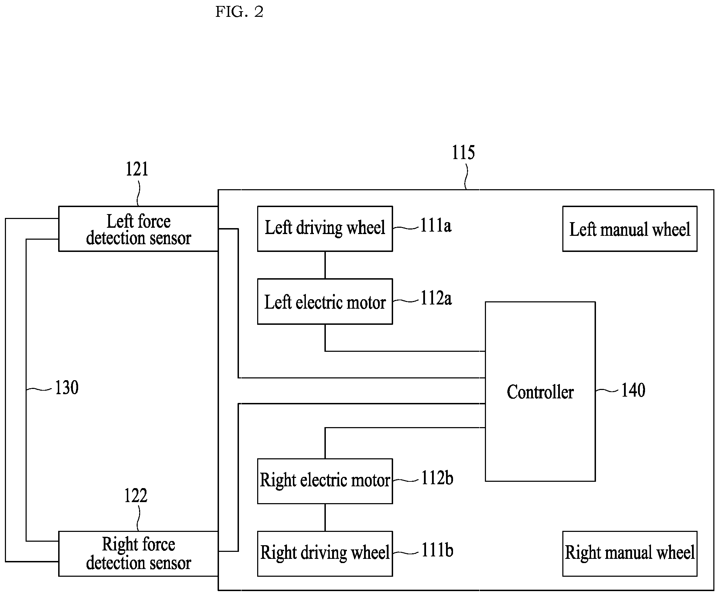

FIG. 1 is a perspective view of an electric moving vehicle according to an example embodiment, and FIG. 2 is a diagram illustrating a configuration of an electric moving vehicle according to an example embodiment.

Hereinafter, an electric moving vehicle 100 according to an example embodiment is described with reference to FIGS. 1 and 2.

Referring to FIGS. 1 and 2, the electric moving vehicle 100 is configured to load goods to be transported and move the loaded goods, and includes a single pair of driving wheels including a left driving wheel 111a and a right driving wheel 111b provided on the left and the right, respectively, and a single pair of electric motors including a left electric motor 112a and a right electric motor 112b configured to drive the left driving wheel 111a and the right driving wheel 111b, respectively, and a body configured as a deckboard 115 configured to load goods to be transported.

The electric moving vehicle 100 further includes a grip 130 provided at one side of the body, a single pair of force detection sensors including a left force detection sensor 121 and a right force detection sensor 122 provided between a lower portion of left and right ends of the grip 130 and an upper portion of the deckboard 115 and configured to detect a force transferred from the user to the body through the grip 130, and a controller 140 configured to control driving of the left electric motor 112a and the right electric motor 112b based on the force transferred to the body.

Although not illustrated in detail, the electric moving vehicle 100 may basically include a chargeable battery. Here, the battery may supply power required for the electric moving vehicle 100, including driving of the left electric motor 112a and the right electric motor 112b under control of the controller 140.

According to the above configuration, the electric moving vehicle 100 may move desired goods to a desired location conveniently in such a manner that the goods to be transported are loaded on the deckboard 115 of the body and the left driving wheel 111a and the right driving wheel 111b are driven by the left electric motor 112a and the right electric motor 112b, respectively.

In the electric moving vehicle 100, the grip 130 holdable by the user may be provided on one side of the body. Accordingly, the user may apply a force in a direction in which the goods are to be transported with holding the grip 130 of the electric moving vehicle 100.

In the electric moving vehicle 100, the force detection sensors including the left and right force detection sensors 121 and 122 may be provided between the left and right ends of the grip 130. Here, each of the left force detection sensor 121 and the right force detection sensor 122 may detect the force applied by the user to the grip 130 and transferred to the body. Here, the left and right force detection sensors 121 and 122 may include a loadcell. In addition, a variety of sensors capable of measuring a force, such as a strain gauge, may be used.

Referring to FIG. 1, the left force detection sensor 121 and the right force detection sensor 122 may be provided on the left and the right, respectively, at one upper side of the deckboard 115 on which goods to be transported are to be loaded. Accordingly, the left and right force detection sensors 121 and 122 may accurately and effectively detect the force applied by the user to the grip 130 and transferred to the body.

In the aforementioned electric moving vehicle 100, a single pair of force detection sensors including the left force detection sensor 121 and the right force detection sensor 122 are provided between the left and right ends of the grip 130 and the deckboard 115 instead of being provided at an upper end of the grip 13, such that the user may control the electric moving vehicle 100 based on not a fixed location of the grip 130 but a location convenient for the user.

In detail, the single pair of force detection sensors may include the left force detection sensor 121 configured to detect a force transferred to the left end of the grip 130 and the right force detection sensor 122 configured to detect a force transferred to the right end of the grip 130 from the force applied by the user. Accordingly, in the electric moving vehicle 100, the single pair of force detection sensors including the left and right force detection sensors 121 and 122 may be present in a path through which the force applied by the user is transferred, and may detect the force applied by the user. Thus, although the user uses only a single hand without a need to use both hands, the electric moving vehicle 100 may detect the force applied by the user, which enables the user to easily operate the electric moving vehicle 100.

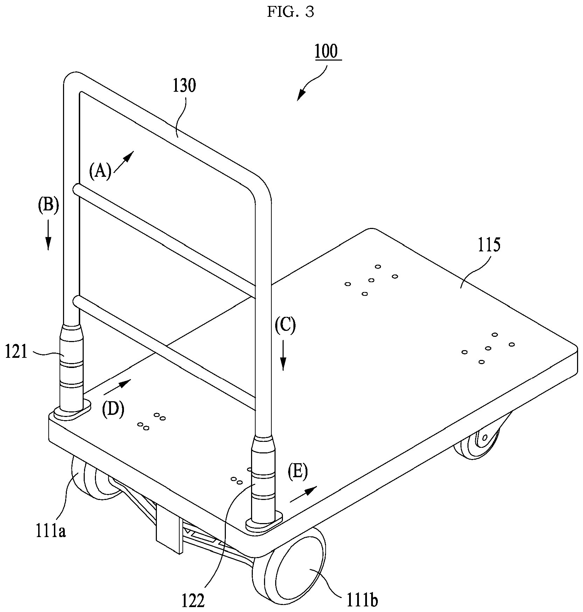

FIG. 3 illustrates an example of a process of transferring a force applied by a user in an electric moving vehicle according to an example embodiment.

Hereinafter, operations of the left and right force detection sensors 121 and 122 are described with reference to FIG. 3.

Referring to FIG. 3, if the user applies a force in a direction, for example, direction (A), in which loaded goods are to be transported with holding the grip 130 using a single hand or both hands, a portion of the force applied by the user may be applied to the left, for example, direction (D), of the body through the left end of the grip 130 and the left force detection sensor 121 (direction (B)). Also, a portion of the force applied by the user may be applied to the right, for example, direction (E), of the body through the right end of the grip 130 and the right force detection sensor 122 (direction (C)).

According to an example embodiment, while maintaining a driving direction of the electric moving vehicle 100 by a force applied by the user to the grip 130 and transferred to the body, the electric moving vehicle 100 may amplify a magnitude of the force transferred to the body and may control operations of the left and right electric motors 112a and 112b to drive the electric moving vehicle 100. Accordingly, although heavy goods are loaded, the user may easily control the electric moving vehicle 100 to move the loaded goods to a desired location.

The electric moving vehicle 100 may include the controller 140 configured to control driving of the left and right electric motors 112a and 112b based on sensing data generated at the left and right force detection sensors 121 and 122. In general, the controller 140 may be provided to the body. However, it is only an example and thus, without being limited thereto, the controller 140 may be provided to, for example, the grip 130. In addition, the controller 140 may be provided at any locations at which the controller 140 may appropriately operate.

While maintaining a driving direction of the electric moving vehicle 100 by a force applied by the user to the grip 130 and transferred to the body, the controller 140 may amplify a magnitude of the force transferred to the body and control the electric motors 112a and 112b. For example, a brushless DC (BLDC) motor may be used for an electric motor, such as the left electric motor 112a and the right electric motor 112b in the electric moving vehicle 100. In addition, any motors that enable the controller 140 to control the electric moving vehicle 100 to appropriately operate may be applied.

Since the controller 140 controls current applied to the left and right electric motors 112a and 112b based on sensing data generated at the left and right force detection sensors 121 and 122, the user may intuitively and easily control the electric moving vehicle 100 to move. Here, if the controller 140 performs a current control in controlling driving of the left and right electric motors 112a and 112b, torque, that is, a rotational force, of the left and right electric motors 112a and 112b may occur to be proportional to the current applied to the left and right electric motors 112a and 112b. Accordingly, the user may easily control the electric moving vehicle 100 to move even using a small amount of force. The controller 140 may use a pulse width modulation (PWM) signal having various duties to control the current applied to the left and right electric motors 112a and 112b. That is, the controller 140 of the electric moving vehicle 100 may effectively control the current applied to the left and right electric motors 112a and 112b using the PWM signal.

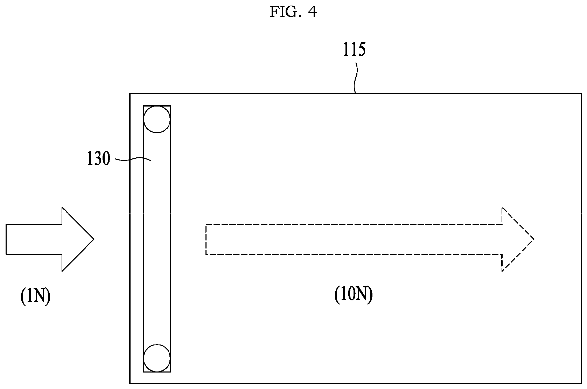

FIGS. 4 through 6 illustrate examples of a process of driving an electric moving vehicle based on a force applied by a user in then electric moving vehicle according to an example embodiment.

Referring to FIG. 4, if the user vertically applies a force to the grip 130 to make the electric moving vehicle 100 move forward, for example, if the user applies a force of IN, the force applied by the user may be divided into half and a half of the force may be applied to the left of the body through the left end of the grip 130 and the left force detection sensor 121. Also, another half of the force may be applied to the right of the body through the right end of the grip 130 and the right force detection sensor 122. Here, each of the left force detection sensor 121 and the right force detection sensor 122 may detect a force of 0.5N. Accordingly, the controller 140 may amplify a magnitude of the force transferred to the body, that is, amplify the force of IN to 10 N, while maintaining a driving direction of the electric moving vehicle 100 based on the force, for example, 0.5N, detected at each of the left force detection sensor 121 and the right force detection sensor 122, and may control current that is applied to the left electric motor 112a and the right electric motor 112b. Accordingly, the same magnitude of current may be applied to each of the left electric motor 112a and the right electric motor 112b.

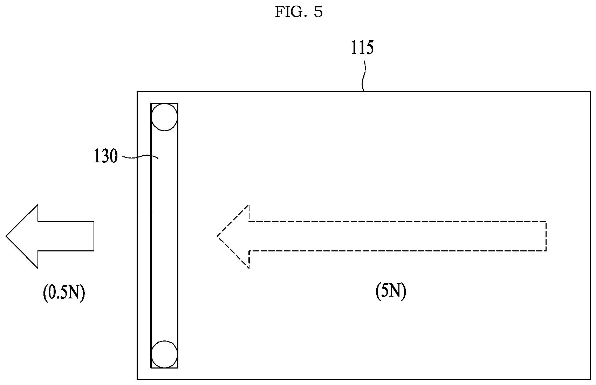

Referring to FIG. 5, if the user applies a force to the grip 130 in a pulling direction to make the electric moving vehicle 100 slowly move backward, for example, if the user applies a force of 0.5N, each of the left force detection sensor 121 and the right force detection sensor 122 may detect a force of 0.25N. Accordingly, the controller 140 may amplify a magnitude of the force transferred to the body, that is, amplify the force of 0.5N to 5N, while maintaining a driving direction of the electric moving vehicle 100 based on the force, for example, 0.25N, detected at each of the left force detection sensor 121 and the right force detection sensor 122, and may control current that is applied to the left electric motor 112a and the right electric motor 112b.

According to an example embodiment, in the case of driving the electric moving vehicle 100 by amplifying a force applied by the user, the force applied by the user may be amplified using various methods, for example, a method of changing an amplification ratio based on an input force and a method of driving the electric moving vehicle 100 based on a preset magnitude of force, instead of applying a preset amplification ratio.

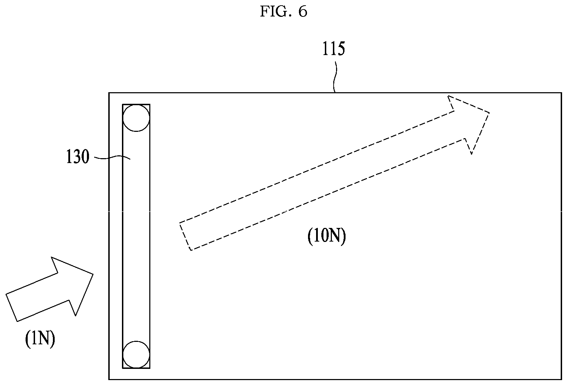

Further, referring to FIG. 6, in the electric moving vehicle 100 according to an example embodiment, although the user applies a force in a direction inclined relative to a forward/backward direction, the controller 140 may amplify a magnitude of the force applied by the user and transferred to the body while maintaining a driving direction of the electric moving vehicle 100 by the force, and may control operations of the left and right electric motors 112a and 112b. Accordingly, the user may steer the electric moving vehicle 100 in a desired direction or may control the electric moving vehicle 100 to move in an intended direction.

In detail, referring to FIG. 6, if the user applies a force to the grip 130 in a desired direction, for example, applies a force of IN, the force applied by the user may be divided at a predetermined ratio based on a corresponding direction and a portion of the force may be applied to the left of the body through the left end of the grip 130 and the left force detection sensor 121 and a remaining thereof may be applied to the right of the body through the right end of the grip 130 and the right force detection sensor 122. Here, if the left force detection sensor 121 detects a force of a[N] and the right force detection sensor 122 detects a force of b[N], the controller 140 may control current that is to be applied to the left electric motor 112a and the right electric motor 112b based on the force detected at the left force detection sensor 121 and the right force detection sensor 122, respectively.

For example, the controller 140 may control the current of the left electric motor 112a and the right electric motor 112b to amplify the force of a[N] so that a force of 10a[N] may be generated at the left driving wheel 111a and to amplify the force of b[N] so that a force of 10b[N] may be generated at the right driving wheel 111b. The controller 140 may amplify a magnitude of force finally applied by the user and transferred to the body to become 10N while maintaining a driving direction of the electric moving vehicle 100 by the force applied by the user and transferred to the body. Accordingly, the user may steer the electric moving vehicle 100 in a desired direction or may control the electric moving vehicle 100 to move in an intended direction.

The aforementioned electric moving vehicle 100 is provided as an example only. Any type of electric moving vehicles operating with a battery may be included in an application target of the example embodiment.

Hereinafter, example embodiments of a calibration algorithm of a force detection sensor, for example, the first force detection sensor 121 and the second force detection sensor 122, will be further described.

The first/second force detection sensor 121, 122, such as a loadcell, configured to electrically measure a force may measure a force transferred using an analog voltage signal. A zero point of the first/second force detection sensor 121, 122 may frequency change due to various external factors by a sensor characteristic.

Accordingly, a calibration operation of newly setting the zero point of the first/second force detection sensor 121, 122 needs to be performed prior to using the electric moving vehicle 100. In general, a method of initially powering on the electric moving vehicle 100 and then performing a calibration right before driving the electric moving vehicle 100 may be employed. In this case, since the user is present adjacent to the electric moving vehicle 100, the user may act as the external interference factor of calibration by, for example, holding the grip 130 or leaning against the body. Also, in many cases, the electric moving vehicle 100 may be located in an activity space of a person right before the electric moving vehicle 100 is used. Accordingly, the electric moving vehicle 100 may be easily exposed to other random interference factors.

In the electric moving vehicle 100, the left force detection sensor 121 and the right force detection sensor 122 are used to control the left electric motor 112a and the right electric motor 112b, respectively. Accordingly, even a small error in a zero point may cause a serious risk. For example, if the user manipulates the electric moving vehicle 100 in a state in which a zero point error is present, a situation unintended by the user, such as a sudden unintended acceleration, may arise.

The aforementioned method of initially powering on a target and then immediately performing the calibration may be inappropriate for the electric moving vehicle 100 in which the user is highly likely to cause a zero point error and a risk by the zero point error is great.

Accordingly, proposed herein is a calibration algorithm capable of maximally avoiding an external interference factor with respect to a force detection sensor, for example, the first and the second force detection sensors 121 and 122, applied to the electric moving vehicle 100 and minimizing the zero point error.

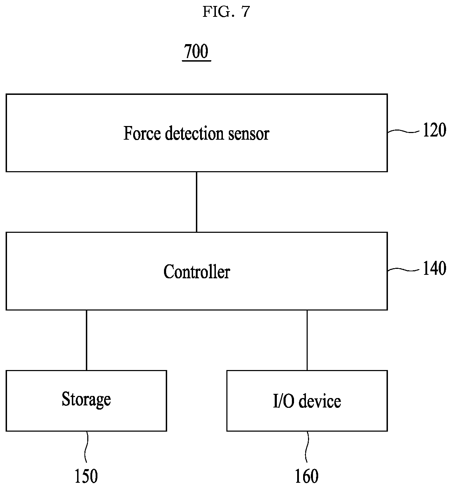

FIG. 7 is a diagram illustrating a configuration of components includable in a calibration apparatus according to an example embodiment.

FIG. 7 illustrates a calibration apparatus 700 of an electric moving vehicle. Here, the calibration apparatus 700 is a component included in the electric moving vehicle.

The electric moving vehicle is configured using a method of controlling an electronic motor configured to amplify a magnitude of a force transferred to a body and to drive a wheel. Here, a calibration operation of setting a zero point of a sensor configured to detect the force transferred to the body is required.

Referring to FIG. 7, the calibration apparatus 700 includes a force detection sensor 120, a controller 140, a storage 150, and an input/output (I/O) device 160.

The force detection sensor 120 detects a force transferred to the body of the electric moving vehicle. For example, the force detection sensor 120 may include a loadcell, a strain gauge, and the like, and may measure an amount of force applied to the electric moving vehicle through such a sensor. Here, the force detection sensor 120 may correspond to the left/right force detection sensor 121, 122 of FIGS. 1 and 2.

The controller 140 may perform the processor functionality of performing basic arithmetic operations, logic operations, and I/O operations, and may be configured to process instructions of a computer program. The instructions may be provided to the controller 140 by way of the storage 150 included as a component of the electric moving vehicle. For example, the controller 140 may be configured to execute an instruction received according to a program code stored in the storage 150.

The controller 140 of FIG. 7 corresponds to the controller 140 of FIGS. 1 and 2 and may control driving of the electric motor 110 to move the electric moving vehicle based on a force transferred from the user to the electric moving vehicle. In particular, the controller 140 performs a calibration operation of setting a zero point of the force detection sensor 120. Hereinafter, the calibration operation will be further described.

The storage 150 refers to a computer-readable recording medium and may include a permanent mass storage device, for example, random access memory (RAM), read only memory (ROM), and a disk drive. Also, an operating system (OS) and at least one program code, for example, a code for an application installed and executed on the electric moving vehicle, may be stored on the storage 150. Such software components may be loaded from other computer-readable recording media separate from the storage 150. The other computer-readable recording media may include, for example, a floppy drive, a disc, a tape, DVD/CD-ROM drive, and a memory card.

The storage 150 may store and maintain data associated with a calibration of the force detection sensor 120. Here, the storage 150 may store an initial setting value, for example, a factory value, about a zero point of the force detection sensor 120 and stores sensing data that is measured during a calibration process and final data that is set as the zero point.

The I/O device 160 may be a device for interface between the electric moving vehicle and the user. For example, an input device may include a device, such as a keyboard and a mouse, and an output device may include a device, such as a light emitting diode (LED) and a display. As another example, the I/O device 160 may be a device in which an input function and an output function are integrated, such as a touchscreen. In detail, for example, the controller 140 may display information associated with calibration and may receive a user instruction associated with the calibration through the I/O device 160 in processing an instruction of the computer program loaded to the storage 150.

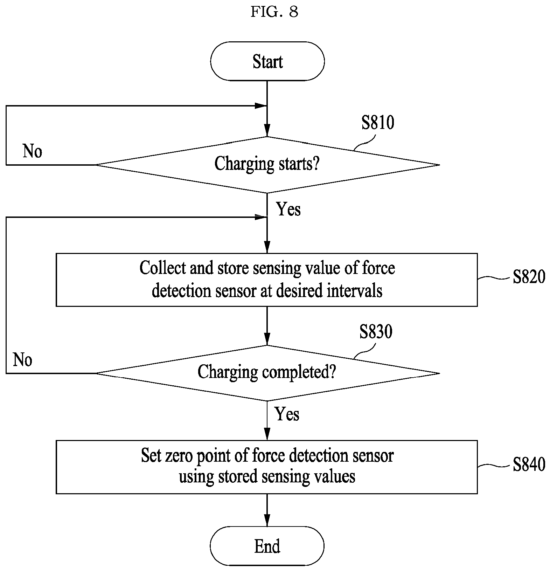

FIG. 8 is a flowchart illustrating an example of a calibration method of an electric moving vehicle performed by a calibration apparatus according to an example embodiment. The calibration method may be performed by the controller 140 of the electric moving vehicle of FIG. 7.

Referring to FIG. 8, in operation S810, the controller 140 may determine whether charging of the electric moving vehicle using a battery starts. If an electric plug or a charging cable is connected to the electric moving vehicle, the controller 140 may recognize that the charging starts. The electric plug or the charging cable may be connected to the electric moving vehicle during charging of the electric moving vehicle. Thus, the electric moving vehicle may be present in an environment in which an operation intent of the user and an external interference factor are minimized.

In operation S820, once charging of the electric moving vehicle starts, the controller 140 collects a sensing value of the force detection sensor 120 that detects a force applied to the electric moving vehicle at desired intervals, and stores the collected sensing values in the storage 150. For example, the controller 140 may measure a zero point of the force detection sensor 120 at the same time intervals, for example, every 15 minutes or 20 minutes, during an entire period of time after charging of the electric moving vehicle starts. As another example, the controller 140 may measure a zero point of the force detection sensor 120 at intervals of a first time during a specific period of time after charging of the electric moving vehicle starts and may measure the zero point of the force detection sensor 120 at intervals of a second time different from the first time during a remaining period of time. In detail, the controller 140 may collect a sensing value of the force detection sensor 120 intermittently, for example, every 1 hour during 2 hours right after charging starts and may collect the sensing value of the force detection sensor 120 relatively further frequently, for example, every 20 minutes after 2 hours elapses. Here, the controller 140 may remove noise in the sensing values of the force detection sensor 120 collected at desired intervals using a low pass filter and may store the noise-removed sensing values.

In operation S830, the controller 140 may determine whether charging of the electric moving vehicle is completed. If the battery of the electric moving vehicle is fully charged or if the electric plug or the charging cable is disconnected from the electric moving vehicle, the controller 140 may recognize that charging of the electric moving vehicle is completed.

In operation S840, once charging of the electric moving vehicle is completed, the controller 140 may set the zero point of the force detection sensor 120 based on the sensing values stored at desired intervals during the charging process. The controller 140 may collect the sensing value of the force detection sensor 120 at desired intervals until charging of the electric moving vehicle is completed and may set the zero point of the force detection sensor 120 based on the collected sensing values.

Although the description is made based on an example in which the zero point of the force detection sensor 120 is set at a point in time at which charging is completed, it is provided as an example only. For example, the zero point of the force detection sensor 120 may be set at a point in time sufficient for calibration after charging of the electric moving vehicle starts, for example, at a point in time at which a preset period of time, for example, 2 hours elapses.

Accordingly, the calibration apparatus of the electric moving vehicle may perform the calibration of the force detection sensor 120 during charging of the electric moving vehicle, thereby preventing an effect by a potential external interference factor.

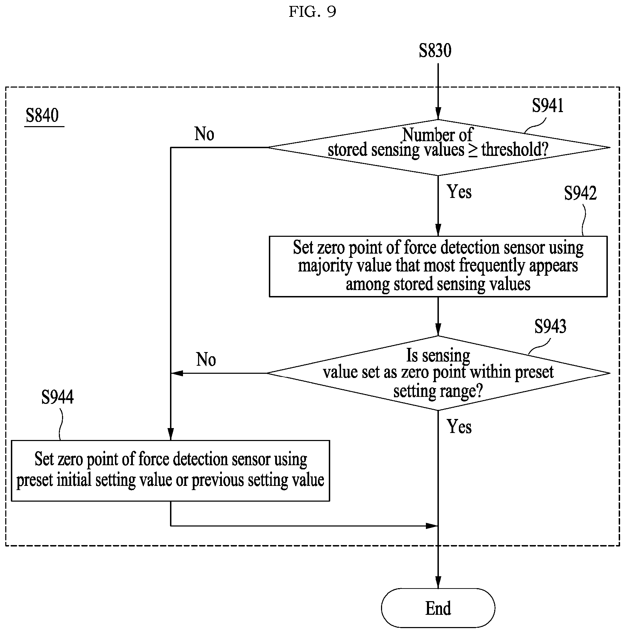

FIG. 9 is a flowchart illustrating an example of operation S840 of setting a zero point of a force detection sensor according to example embodiment.

Referring to FIG. 9, in operation S941, the controller 140 may determine whether a number of sensing values stored during charging of the electric moving vehicle is greater than or equal to a threshold. That is, if a sufficient number of sensing values of the force detection sensor 120 are not collected due to a lack of a charging time for the electric moving vehicle, whether a sufficient number of sensing values for the calibration are secured may need to be verified.

In operation S942, if the number of sensing values stored during charging of the electric moving vehicle is greater than or equal to the threshold, the controller 140 sets the zero point of the force detection sensor 120 using a majority value that most frequently appears among the stored sensing values. That is, the controller 140 sets, as the zero point of the force detection sensor 120, a sensing value corresponding to a majority value among the stored sensing values by applying a majority filter. Alternatively, the controller 140 averages remaining sensing values excluding a maximum value and a minimum value from among the sensing values stored during charging of the electric moving vehicle and sets the average value as the zero point of the force detection sensor 120. Here, the controller 140 may process sensing values having a difference therebetween within a desired range as a single sensing value. That is, the controller 140 may regard and process sensing values having an insignificant difference therebetween as the same value.

In operation S943, the controller 140 may determine whether the sensing value set as the zero point of the force detection sensor 120 is within a preset setting range. Here, the setting range is a reference used to determine a reliability of the zero point and may be determined using ± range values based on an initial setting value, for example, a factory value, about the zero point of the force detection sensor 120. That is, the controller 140 may determine a reliability of a sensing value set as the zero point of the force detection sensor 120 and may terminate the calibration if the sensing value set as the zero point of the force detection sensor 120 is included in a reliable range.

If the number of sensing values stored during charging of the electric moving vehicle is determined to be less than the threshold in operation S941 or if the number of sensing values set as the zero point of the force detection sensor 120 is determined to be outside the preset setting range in operation S943, the controller 140 may set the zero point of the force detection sensor 120 using an initial setting value preset for the zero point of the force detection sensor 120 or a sensing value that is previously set as the zero point in operation S944.

Accordingly, the controller 140 may set the zero point of the force detection sensor 120 by applying the majority filter to the sensing values stored during charging of the electric moving vehicle. If a sufficient number of measurement values of sensing values of the force detection sensor 120 are not collected due to a lack of a charging time for the electric moving vehicle or if the sensing value set as the zero point of the force detection sensor 120 is outside the reliable range, the controller 140 may reuse the initial setting value of the force detection sensor 120 or a most recently secured reliable zero point.

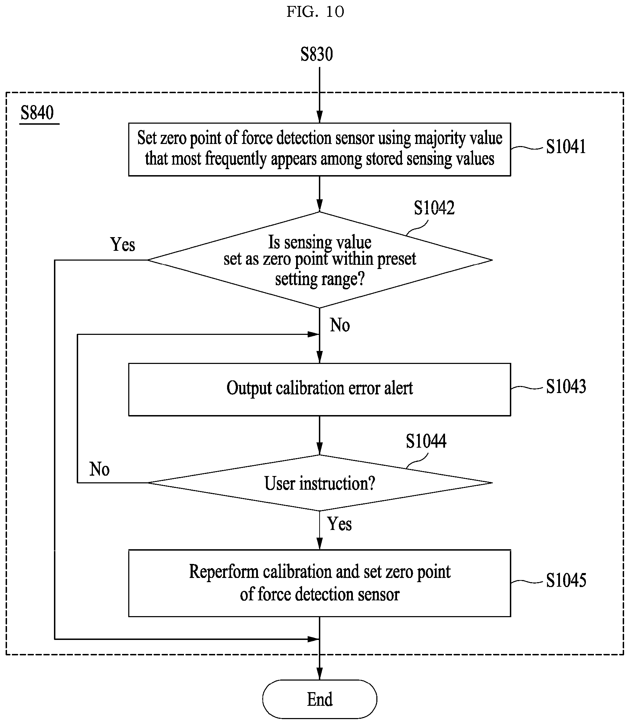

FIG. 10 is a flowchart illustrating another example of operation S840 of setting a zero point of a force detection sensor according to example embodiment.

Referring to FIG. 10, in operation S 1041, the controller 140 sets a zero point of the force detection sensor 120 using a majority value that most frequently appears among sensing values stored during charging of the electric moving vehicle. That is, the controller 140 sets, as the zero point of the force detection sensor 120, a sensing value corresponding to a majority value among the sensing values stored during charging by applying the majority filter. Alternatively, the controller 140 averages remaining sensing values excluding a maximum value and a minimum value among the sensing values stored during charging of the electric moving vehicle and sets the average value as the zero point of the force detection sensor 120.

In operation S1042, the controller 140 may determine whether the sensing value set as the zero point of the force detection sensor 120 is within a preset setting range. Here, the setting range is a reference used to determine a reliability of the zero point and may be determined using ± range values based on an initial setting value that is preset for the zero point of the force detection sensor 120. That is, the controller 140 may determine a reliability of a sensing value set as the zero point of the force detection sensor 120 and may terminate the calibration if the sensing value set as the zero point of the force detection sensor 120 is included in a reliable range.

If the sensing value set as the zero point of the force detection sensor 120 is determined to be outside the preset setting range in operation S1042, the controller 140 may determine that a malfunction issue has occurred during the calibration process and may enter an emergency mode and output a calibration error alert corresponding to the emergency mode through the I/O device 160 in operation S1043. For example, if the calibration is performed during charging in a state in which a predetermined force is applied to the electric moving vehicle, such as in a state in which a clothing is hanging over a grip of the electric moving vehicle, an unreliable sensing value may be set as the zero point of the force detection sensor 120. The controller 140 may recognize a calibration error situation and may output an alert corresponding to the emergency mode.

In operation S1044, the controller 140 may determine whether a user instruction to the calibration error alert is input. The user may verify the calibration error alert output through the I/O device 160 and may recognize a situation in which a normal calibration may not be performed due to an occurrence of an external interference factor in the electric moving vehicle, for example, a clothing or an obstacle hanging over the grip. The user may directly remove the external interference factor from the electric moving vehicle and may request reperforming of the calibration. The user instruction to request reperforming of the calibration may be transferred to the controller 140 through a predetermined button among input devices of the I/O device 160 in response to the calibration error alert.

In operation S 1045, if the user instruction to the calibration error alert is input, the controller 140 may reperform the calibration of the force detection sensor 120 and may set the zero point of the force detection sensor 120. Once the user removes the external interference factor from the electric moving vehicle and requests reperforming of the calibration, the controller 140 may newly collect the sensing value of the force detection sensor 120 at desired time intervals from a point in time at which the user instruction is input and may set the zero point of the force detection sensor 120 based on the newly collected sensing values.

As described above, according to example embodiments, it is possible to maximally avoid an external interference factor and to minimize a zero point error by performing a calibration of a force detection sensor during a charging process of an electric moving vehicle. Also, according to example embodiments, it is possible to enhance reliability of a zero point and to significantly reduce a risk probability by a malfunction by reusing an initial setting value or a currently secured reliable zero point if a value set as a zero is outside a setting range.

The systems or apparatuses described herein may be implemented using hardware components, software components, and/or a combination thereof. For example, the apparatuses and the components described herein may be implemented using one or more general-purpose or special purpose computers, such as, for example, a processor, a controller, an arithmetic logic unit (ALU), a digital signal processor, a microcomputer, a field programmable gate array (FPGA), a programmable logic unit (PLU), a microprocessor, or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is used as singular; however, one skilled in the art will be appreciated that a processing device may include multiple processing elements and/or multiple types of processing elements. For example, a processing device may include multiple processors or a processor and a controller. In addition, different processing configurations are possible, such as parallel processors.

The software may include a computer program, a piece of code, an instruction, or some combination thereof, for independently or collectively instructing or configuring the processing device to operate as desired. Software and data may be embodied permanently or temporarily in any type of machine, component, physical or virtual equipment, computer storage medium or device, or in a propagated signal wave capable of providing instructions or data to or being interpreted by the processing device. The software also may be distributed over network coupled computer systems so that the software is stored and executed in a distributed fashion. In particular, the software and data may be stored by one or more computer readable storage mediums.

The methods according to the above-described example embodiments may be recorded in non-transitory computer-readable media including program instructions to implement various operations of the above-described example embodiments. The media may also include, alone or in combination with the program instructions, data files, data structures, and the like. The program instructions recorded on the media may be those specially designed and constructed for the purposes of example embodiments, or they may be of the kind well-known and available to those having skill in the computer software arts. Examples of non-transitory computer-readable media include magnetic media such as hard disks, floppy disks, and magnetic tapes; optical media such as CD-ROM discs, and DVDs; magneto-optical media such as floptical disks; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The above-described devices may be configured to act as one or more software modules in order to perform the operations of the above-described example embodiments, or vice versa.

A number of example embodiments have been described above. Nevertheless, it should be understood that various modifications may be made to these example embodiments. For example, suitable results may be achieved if the described techniques are performed in a different order and/or if components in a described system, architecture, device, or circuit are combined in a different manner and/or replaced or supplemented by other components Accordingly, other implementations are within the scope of the following claims.

## Claims

1. A computer-implemented calibration method comprising:
collecting sensing values of a force detection sensor (120) that detects a force applied to an electric moving vehicle (100) during charging of a battery included in the electric moving vehicle; and
setting a majority or average of the sensing values collected during the charging of the battery as a zero point of the force detection sensor by, respectively,
setting the zero point of the force detection sensor using a majority value that most frequently appears among the collected sensing values; or
setting an average value of remaining sensing values excluding a maximum value and a minimum value from among the collected sensing values as the zero point of the force detection sensor.

2. The method of claim 1 wherein the electric moving vehicle is configured using a method of controlling an electronic motor configured to amplify a magnitude of the detected force transferred to a body of the vehicle and to drive a wheel of the vehicle.

3. The method of claim 1 or 2, wherein the electric moving vehicle (100) is configured to load goods to be transported and move the loaded goods, and includes a single pair of driving wheels including a left driving wheel (111a) and a right driving wheel (111b) provided on the left and the right, respectively, and a single pair of electric motors including a left electric motor (112a) and a right electric motor (112b) configured to drive the left driving wheel (111a) and the right driving wheel (111b), respectively, and a body configured as a deckboard (115) configured to load goods to be transported, wherein the electric moving vehicle (100) further includes a grip (130) provided at one side of the body, a single pair of force detection sensors including a left force detection sensor (121) and a right force detection sensor (122) provided between a lower portion of left and right ends of the grip (130) and an upper portion of the deckboard (115) and configured to detect a force transferred from the user to the body through the grip (130), and a controller (140) configured to control driving of the left electric motor (112a) and the right electric motor (112b) based on the force transferred to the body.

4. The method of any of the preceding claims, wherein the setting comprises:
setting the zero point of the force detection sensor using the collected sensing values if a number of the collected sensing values is greater than or equal to a threshold; and
setting the zero point of the force detection sensor using a preset initial setting value or a sensing value that is previously set as the zero point if the number of collected sensing values is less than the threshold.

5. The method of any of the preceding claims, wherein the setting comprises determining the average or majority of the sensing values set as the zero point of the force detection sensor as a calibration error if the average or majority of the sensing values set as the zero point of the force detection sensor is outside a preset setting range and outputting a calibration error alert.

6. The method of claim 5, wherein the setting comprises newly collecting the sensing values of the force detection sensor from a point in time at which a user instruction is input in response to the input of the user instruction for requesting reperforming of a calibration, and setting the zero point of the force detection sensor based on the newly collected sensing values.

7. The method of claim 5 or 6, wherein the setting range is determined based on an initial setting value predetermined for the zero point of the force detection sensor as a reference used to determine a reliability of the sensing value set as the zero point of the force detection sensor.

8. The method of any of the preceding claims, wherein the collecting comprises storing noise-removed sensing values after removing noise from the sensing values of the force detection sensor using a low pass filter.

9. The method of any of the preceding claims, wherein the electric moving vehicle is configured as a moving transportation structure on which a user is boarded.

10. A calibration apparatus (700) of an electric moving vehicle (100), the calibration apparatus comprising:
a force detection sensor (120) configured to detect a force applied to the electric moving vehicle; and
a controller (140) configured to collect sensing values of the force detection sensor during charging of a battery included in the electric moving vehicle, and to set an average or majority of the sensing values collected during the charging of the battery as a zero point of the force detection sensor by
setting the zero point of the force detection sensor using a majority value that most frequently appears among the collected sensing values; or
setting an average value of remaining sensing values excluding a maximum value and a minimum value from among the collected sensing values as the zero point of the force detection sensor.

11. The calibration apparatus of claim 10, wherein the controller is configured to
set the zero point of the force detection sensor using the collected sensing values if a number of the collected sensing values is greater than or equal to a threshold, and
set the zero point of the force detection sensor using a preset initial setting value or a sensing value that is previously set as the zero point if the number of collected sensing values is less than the threshold.

12. The calibration apparatus of claims 10 or 11, wherein the controller is configured to
determine an average or majority of sensing values set as the zero point of the force detection sensor as a calibration error if the average or majority of sensing values set as the zero point of the force detection sensor is outside a preset setting range and output a calibration error alert, and
newly collect the sensing values of the force detection sensor from a point in time at which a user instruction is input in response to the input of the user instruction for requesting reperforming of a calibration, and set the zero point of the force detection sensor based on the newly collected sensing values.

13. The calibration apparatus of any of claims 10-12, wherein the electric moving vehicle is configured as a moving transportation structure on which a user is boarded.

14. An electric moving vehicle (100) comprising the calibration apparatus of any of claims 10-13, wherein the electric moving vehicle is configured using a method of controlling an electronic motor configured to amplify a magnitude of the detected force transferred to a body of the vehicle and to drive a wheel of the vehicle.

15. The electric moving vehicle (100) of claim 14, wherein the electric moving vehicle (100) is configured to load goods to be transported and move the loaded goods, and includes a single pair of driving wheels including a left driving wheel (111a) and a right driving wheel (111b) provided on the left and the right, respectively, and a single pair of electric motors including a left electric motor (112a) and a right electric motor (112b) configured to drive the left driving wheel (111a) and the right driving wheel (111b), respectively, and a body configured as a deckboard (115) configured to load goods to be transported, wherein the electric moving vehicle (100) further includes a grip (130) provided at one side of the body, a single pair of force detection sensors including a left force detection sensor (121) and a right force detection sensor (122) provided between a lower portion of left and right ends of the grip (130) and an upper portion of the deckboard (115) and configured to detect a force transferred from the user to the body through the grip (130), and a controller (140) configured to control driving of the left electric motor (112a) and the right electric motor (112b) based on the force transferred to the body.

## Patentansprüche

1. Computerimplementiertes Kalibrierungsverfahren, umfassend:
Erfassen von Abtastwerten eines Krafterfassungssensors (120), der eine Kraft erfasst, die während des Aufladens einer in dem elektrisch fahrenden Fahrzeug enthaltenen Batterie an ein elektrisch fahrendes Fahrzeug (100) angelegt wird; und
Einstellen einer Mehrheit oder eines Durchschnitts der während des Aufladens der Batterie erfassten Abtastwerte als Nullpunkt des Krafterfassungssensors jeweils durch
Einstellen des Nullpunkts des Krafterfassungssensors unter Verwendung eines Mehrheitswertes, der am häufigsten unter den erfassten Abtastwerten auftritt; oder
Einstellen eines Durchschnittswerts der verbleibenden Abtastwerte unter Ausschluss eines Maximalwerts und eines Minimalwerts unter den erfassten Abtastwerten als Nullpunkt des Krafterfassungssensors.

2. Verfahren nach Anspruch 1, wobei das elektrisch fahrende Fahrzeug unter Verwendung eines Verfahrens zur Steuerung eines elektronischen Motors ausgelegt ist, der so ausgelegt ist, dass er eine Größe der erfassten Kraft, die auf eine Karosserie des Fahrzeugs übertragen wird, verstärkt und ein Rad des Fahrzeugs antreibt.

3. Verfahren nach Anspruch 1 oder 2, wobei das elektrisch fahrende Fahrzeug (100) so ausgelegt ist, dass es zu transportierende Güter lädt und die geladenen Güter fährt, und ein einzelnes Paar Antriebsräder, umfassend ein linkes Antriebsrad (111a) und ein rechtes Antriebsrad (111b), die jeweils links und rechts bereitgestellt sind, und ein einzelnes Paar Elektromotoren umfassend einen linken Elektromotor (112a) und einen rechten Elektromotor (112b), die so ausgelegt sind, dass sie jeweils das linke Antriebsrad (111a) und das rechte Antriebsrad (111b) antreiben, und eine als Deckbrett (115) ausgelegte Karosserie, die zum Laden von zu transportierenden Gütern ausgelegt ist, umfasst, wobei das elektrisch fahrende Fahrzeug (100) ferner einen Griff (130), der an einer Seite der Karosserie bereitgestellt ist, ein einzelnes Paar Krafterfassungssensoren, umfassend einen linken Krafterfassungssensor (121) und einen rechten Krafterfassungssensor (122), die zwischen einem unteren Abschnitt des linken und rechten Endes des Griffs (130) und einem oberen Abschnitt des Deckbretts (115) bereitgestellt sind und so ausgelegt sind, dass sie eine Kraft, die vom Benutzer zur Karosserie durch den Griff (130) übertragen wird, erfassen, und eine Steuerung (140), die so ausgelegt ist, dass sie den Antrieb des linken Elektromotors (112a) und des rechten Elektromotors (112b) basierend auf der auf die Karosserie übertragenen Kraft steuert, einschließt.

4. Verfahren nach einem der vorhergehenden Ansprüche, wobei das Einstellen umfasst:
Einstellen des Nullpunkts des Krafterfassungssensors unter Verwendung der erfassten Abtastwerte, wenn eine Anzahl der erfassten Abtastwerte größer oder gleich einem Schwellenwert ist; und
Einstellen des Nullpunkts des Krafterfassungssensors unter Verwendung eines voreingestellten anfänglichen Einstellwerts oder eines Abtastwerts, der zuvor als Nullpunkt eingestellt wurde, wenn die Anzahl der erfassten Abtastwerte weniger als der Schwellenwert ist.

5. Verfahren nach einem der vorhergehenden Ansprüche, wobei das Einstellen das Bestimmen des Durchschnitts oder der Mehrheit der als Nullpunkt des Krafterfassungssensors eingestellten Abtastwerte als Kalibrierungsfehler umfasst, wenn der Durchschnitt oder die Mehrheit der als Nullpunkt des Krafterfassungssensors eingestellten Abtastwerte außerhalb eines voreingestellten Einstellbereichs liegt, und das Ausgeben einer Kalibrierungsfehlerwarnung.

6. Verfahren nach Anspruch 5, wobei das Einstellen das erneute Erfassen der Abtastwerte des Krafterfassungssensors ab einem Zeitpunkt, zu dem eine Benutzeranweisung als Reaktion auf die Eingabe der Benutzeranweisung zur Aufforderung zur erneuten Durchführung einer Kalibrierung eingegeben wird, und das Einstellen des Nullpunkts des Krafterfassungssensors basierend auf den neu erfassten Abtastwerten umfasst.

7. Verfahren nach Anspruch 5 oder 6, wobei der Einstellbereich basierend auf einem anfänglichen Einstellwert bestimmt wird, der für den Nullpunkt des Krafterfassungssensors als Referenz vorgegeben ist, die verwendet wird, um eine Zuverlässigkeit des als Nullpunkt des Krafterfassungssensors eingestellten Erfassungswerts zu bestimmen.

8. Verfahren nach einem der vorhergehenden Ansprüche, wobei das Erfassen das Speichern von rauschentfernten Abtastwerten nach dem Entfernen von Rauschen aus den Abtastwerten des Krafterfassungssensors unter Verwendung eines Tiefpassfilters umfasst.

9. Verfahren nach einem der vorhergehenden Ansprüche, wobei das elektrisch fahrende Fahrzeug als fahrende Transportstruktur ausgelegt ist, in die ein Benutzer eingestiegen ist.

10. Kalibrierungsvorrichtung (700) eines elektrisch fahrenden Fahrzeugs (100), wobei die Kalibrierungsvorrichtung umfasst:
einen Krafterfassungssensor (120), der so ausgelegt ist, dass er eine auf das elektrisch fahrende Fahrzeug ausgeübte Kraft erfasst; und
eine Steuerung (140), die so ausgelegt ist, dass sie Abtastwerte des Krafterfassungssensors während des Aufladens einer in dem elektrisch fahrenden Fahrzeug enthaltenen Batterie erfasst und einen Mittelwert oder
eine Mehrheit der während des Aufladens der Batterie erfassten Abtastwerte als einen Nullpunkt des Krafterfassungssensors einstellt, durch Einstellen des Nullpunkts des Krafterfassungssensors unter Verwendung eines Mehrheitswertes, der am häufigsten unter den erfassten Abtastwerten auftritt; oder
Einstellen eines Durchschnittswerts der verbleibenden Abtastwerte unter Ausschluss eines Maximalwerts und eines Minimalwerts unter den erfassten Abtastwerten als Nullpunkt des Krafterfassungssensors.

11. Kalibrierungsvorrichtung nach Anspruch 10, wobei die Steuerung so ausgelegt ist, dass sie
den Nullpunkt des Krafterfassungssensors unter Verwendung der erfassten Abtastwerte einstellt, wenn eine Anzahl der erfassten Abtastwerte größer als oder gleich einem Schwellenwert ist, und
den Nullpunkt des Krafterfassungssensors unter Verwendung eines voreingestellten anfänglichen Einstellwerts oder eines Abtastwerts einstellt, der zuvor als Nullpunkt eingestellt wurde, wenn die Anzahl der erfassten Abtastwerte weniger als der Schwellenwert ist.

12. Kalibrierungsvorrichtung nach Anspruch 10 oder 11, wobei die Steuerung so ausgelegt ist, dass sie
einen Durchschnitt oder eine Mehrheit von Abtastwerten bestimmt, die als der Nullpunkt des Krafterfassungssensors eingestellt sind, als einen Kalibrierungsfehler, wenn der Durchschnitt oder die Mehrheit von Abtastwerten, die als der Nullpunkt des Krafterfassungssensors eingestellt sind, außerhalb eines voreingestellten Einstellbereichs liegt, und eine Kalibrierungsfehlerwarnung ausgibt, und
die Abtastwerte des Krafterfassungssensors ab einem Zeitpunkt, zu dem eine Benutzeranweisung eingegeben wird, als Reaktion auf die Eingabe der Benutzeranweisung zur Aufforderung zur erneuten Durchführung einer Kalibrierung neu erfasst und den Nullpunkt des Krafterfassungssensors basierend auf den neu erfassten Abtastwerten einstellt.

13. Kalibrierungsvorrichtung nach einem der Ansprüche 10 bis 12, wobei das elektrisch fahrende Fahrzeug als eine fahrende Transportstruktur ausgelegt ist, in die ein Benutzer eingestiegen ist.

14. Elektrisch fahrendes Fahrzeug (100), das die Kalibrierungsvorrichtung nach einem der Ansprüche 10 bis 13 umfasst, wobei das elektrisch fahrende Fahrzeug unter Verwendung eines Verfahrens zur Steuerung eines elektronischen Motors ausgelegt ist, der so ausgelegt ist, dass er eine Größe der erfassten Kraft, die auf eine Karosserie des Fahrzeugs übertragen wird, verstärkt und ein Rad des Fahrzeugs antreibt.

15. Elektrisch fahrendes Fahrzeug (100) nach Anspruch 14, wobei das elektrisch fahrende Fahrzeug (100) so ausgelegt ist, dass es zu transportierende Güter lädt und die geladenen Güter fährt, und ein einzelnes Paar Antriebsräder, umfassend ein linkes Antriebsrad (111a) und ein rechtes Antriebsrad (111b), die jeweils links und rechts bereitgestellt sind, und ein einzelnes Paar Elektromotoren, umfassend einen linken Elektromotor (112a) und einen rechten Elektromotor (112b), die so ausgelegt sind, dass sie jeweils das linke Antriebsrad (111a) und das rechte Antriebsrad (111b) antreiben, und eine als Deckbrett (115) ausgelegte Karosserie, die zum Laden von zu transportierenden Gütern ausgelegt ist, einschließt, wobei das elektrisch fahrende Fahrzeug (100) ferner einen Griff (130), der an einer Seite der Karosserie bereitgestellt ist, ein einzelnes Paar Krafterfassungssensoren, umfassend einen linken Krafterfassungssensor (121) und einen rechten Krafterfassungssensor (122), die zwischen einem unteren Abschnitt des linken und rechten Endes des Griffs (130) und einem oberen Abschnitt des Deckbretts (115) bereitgestellt sind und so ausgelegt sind, dass sie eine Kraft, die vom Benutzer zur Karosserie durch den Griff (130) übertragen wird, erfassen, und eine Steuerung (140), die so ausgelegt ist, dass sie den Antrieb des linken Elektromotors (112a) und des rechten Elektromotors (112b) basierend auf der auf die Karosserie übertragenen Kraft steuert, einschließt.

## Revendications

1. Un procédé d'étalonnage mis en œuvre par ordinateur comprenant les étapes consistant à :
collecter les valeurs de détection d'un capteur de détection de force (120) qui détecte une force appliquée à un véhicule de transport électrique (100) pendant la charge d'une batterie incluse dans le véhicule de transport électrique ; et
définir une majorité ou une moyenne des valeurs de détection collectées pendant la charge de la batterie en tant que point zéro du capteur de détection de force, respectivement,
en définissant le point zéro du capteur de détection de force à l'aide d'une valeur majoritaire qui apparaît le plus fréquemment parmi les valeurs de détection collectées; ou
en définissant une valeur moyenne des valeurs de détection restantes à l'exclusion d'une valeur maximale et une valeur minimale parmi les valeurs de détection collectées comme point zéro du capteur de détection de force.

2. Procédé selon la revendication 1 dans lequel le véhicule de transport électrique est configuré à l'aide d'un procédé de commande d'un moteur électronique configuré pour amplifier une amplitude de la force détectée transférée à une structure du véhicule pour entraîner une roue du véhicule.

3. Procédé selon la revendication 1 ou 2, dans lequel le véhicule de transport électrique (100) est configuré pour charger des marchandises à transporter et déplacer les marchandises chargées, et comprend une seule paire de roues motrices comprenant une roue motrice gauche (111a) et une roue motrice droite (111b) prévues respectivement à gauche et à droite, et une seule paire de moteurs électriques comprenant un moteur électrique gauche (112a) et un moteur électrique droit (112b) configurés pour entraîner la roue motrice gauche (111a) et la roue motrice droite (111b), respectivement, et une structure configurée comme un plateforme (115) configuré pour charger des marchandises à transporter, dans lequel le véhicule de transport électrique (100) comprend en outre une poignée (130) prévue sur un côté du corps, une seule paire de capteurs de détection de force comprenant un capteur de détection de force gauche (121) et un capteur de détection de force droit (122) disposés entre une partie inférieure des extrémités gauches et droites de la poignée (130) et une partie supérieure du plateforme (115) et configurées pour détecter une force transférée de l'utilisateur à la structure à travers la poignée (130), et un contrôleur (140) configuré pour contrôler l'entraînement du moteur électrique gauche (112a) et du moteur électrique droit (112b) sur la base de la force transférée à la structure.

4. Procédé selon l'une quelconque des revendications précédentes, dans lequel l'étape consistant à définir comprend :
la définition du point zéro du capteur de détection de force en utilisant les valeurs de détection collectées si un nombre des valeurs de détection collectées est supérieur ou égal à un seuil ; et
la définition du point zéro du capteur de détection de force en utilisant une valeur de définition initiale prédéfinie ou une valeur de détection qui est précédemment définie comme le point zéro si le nombre de valeurs de détection collectées est inférieur au seuil.

5. Procédé selon l'une quelconque des revendications précédentes, dans lequel l'étape consistant à définir comprend la détermination de la moyenne ou de la majorité des valeurs de détection définies comme le point zéro du capteur de détection de force en tant qu'erreur d'étalonnage si la moyenne ou la majorité des valeurs de détection définies comme le point zéro du capteur de détection de force est en dehors d'une plage de définition prédéfinie et l'émission d'une alerte d'erreur d'étalonnage.

6. Procédé selon la revendication 5, dans lequel l'étape consistant à définir comprend les étapes consistant à collecter de nouveau les valeurs de détection du capteur de détection de force à partir d'un instant auquel une instruction utilisateur est entrée en réponse à l'entrée de l'instruction utilisateur pour demander la réexécution d'un étalonnage, et à définir le point zéro du capteur de détection de force sur la base des valeurs de détection nouvellement collectées.

7. Procédé selon la revendication 5 ou 6, dans lequel la plage de définition est déterminée sur la base d'une valeur de définition initiale prédéterminée pour le point zéro du capteur de détection de force en tant que référence utilisée pour déterminer une fiabilité de la valeur de détection définie en tant que point zéro du capteur de détection de force.

8. Procédé selon l'une quelconque des revendications précédentes, dans lequel la collecte comprend le stockage des valeurs de détection sans bruit après avoir supprimé le bruit des valeurs de détection du capteur de détection de force en utilisant un filtre passe-bas.

9. Procédé selon l'une quelconque des revendications précédentes, dans lequel le véhicule de transport électrique est configuré comme une structure de transport mobile sur laquelle un utilisateur est embarqué.

10. Un appareil d'étalonnage (700) d'un véhicule de transport électrique (100), l'appareil d'étalonnage comprenant :
un capteur de détection de force (120) configuré pour détecter une force appliquée au véhicule de transport électrique et
un contrôleur (140) configuré pour collecter des valeurs de détection du capteur de détection de force pendant la charge d'une batterie incluse dans le véhicule de transport électrique, et pour définir une moyenne ou la majorité des valeurs de détection collectées pendant la charge de la batterie en tant que point zéro de le capteur de détection de force en
définissant le point zéro du capteur de détection de force à l'aide d'une valeur majoritaire qui apparaît le plus fréquemment parmi les valeurs de détection collectées; ou
définissant une valeur moyenne des valeurs de détection restantes à l'exclusion d'une valeur maximale et une valeur minimale parmi les valeurs de détection collectées comme point zéro du capteur de détection de force.

11. Appareil d'étalonnage selon la revendication 10, dans lequel le contrôleur est configuré pour
définir le point zéro du capteur de détection de force en utilisant les valeurs de détection collectées si un nombre des valeurs de détection collectées est supérieur ou égal à un seuil, et
définir le point zéro du capteur de détection de force à l'aide d'une valeur de définition initial prédéfinie ou d'une valeur de détection qui est précédemment définie comme le point zéro si le nombre de valeurs de détection collectées est inférieur au seuil.

12. Appareil d'étalonnage selon les revendications 10 ou 11, dans lequel le contrôleur est configuré pour
déterminer une moyenne ou la majorité des valeurs de détection définies comme le point zéro du capteur de détection de force en tant qu'erreur d'étalonnage si la moyenne ou la majorité des valeurs de détection définies comme le point zéro du capteur de détection de force est en dehors d'une plage de définition prédéfinie et pour émettre une alerte d'erreur d'étalonnage, et
collecter à nouveau les valeurs de détection du capteur de détection de force à partir d'un instant auquel une instruction d'utilisateur est entrée en réponse à l'entrée de l'instruction d'utilisateur pour demander la réexécution d'un étalonnage, et définir le point zéro du capteur de détection de force sur la base des valeurs de détection nouvellement collectées.

13. Appareil d'étalonnage selon l'une quelconque des revendications 10 à 12, dans lequel le véhicule de transport électrique est configuré comme une structure de transport mobile sur laquelle un utilisateur est embarqué.

14. Véhicule de transport électrique (100) comprenant l'appareil d'étalonnage selon l'une quelconque des revendications 10 à 13, dans lequel le véhicule de transport électrique est configuré en utilisant un procédé de commande d'un moteur électronique configuré pour amplifier l'amplitude de la force détectée transférée à une structure du véhicule et pour entraîner une roue du véhicule.

15. Véhicule de transport électrique (100) selon la revendication 14, dans lequel le véhicule de transport électrique (100) est configuré pour charger des marchandises à transporter et déplacer les marchandises chargées, et comprend une seule paire de roues motrices comprenant une roue motrice gauche (111a) et une roue motrice droite (111b) prévues respectivement à gauche et à droite, et une seule paire de moteurs électriques comprenant un moteur électrique gauche (112a) et un moteur électrique droit (112b) configurés pour entraîner la roue motrice gauche (111a) et la roue motrice droite (111b), respectivement, et une structure configurée comme un plateforme (115) configuré pour charger des marchandises à transporter, dans lequel le véhicule de transport électrique (100) comprend en outre une poignée (130) prévue sur un côté du corps, une seule paire de capteurs de détection de force comprenant un capteur de détection de force gauche (121) et un capteur de détection de force droit (122) disposés entre une partie inférieure des extrémités gauches et droites de la poignée (130) et une partie supérieure du plateforme (115) et configurées pour détecter une force transférée de l'utilisateur à la structure à travers la poignée (130), et un contrôleur (140) configuré pour contrôler l'entraînement du moteur électrique gauche (112a) et du moteur électrique droit (112b) sur la base de la force transférée à la structure.
